# DEMANDE DE BREVET EUROPEEN

(11) **EP 2 799 645 A1**
(43) Date de publication de la demande: **05.11.2014**
(21) Numéro de dépôt: 14370001.1
(22) Date de dépôt: 28.04.2014
(51) Int. Cl.: E04H 12/20, F03D 11/04

(54) **Soutient rotatif destiné à renforcer les structures ou objets verticaux exposés au vent contre les tempêtes ou les vents trop violents**

(30) Priorité: 02.05.2013 FR 1301026
(71) Demandeur: Nicaise, François, 29610 Oden (ES)
(72) Inventeur: La désignation de l'inventeur n'a pas encore été déposée

(57) **Abrégé**

L'invention concerne un dispositif de renfort spécialement adapté aux caractéristiques du vent, conçu pour renforcer les structures verticales.

Ce dispositif agit dans un angle limité mais grâce à sa possibilité de pouvoir tourner autour du pylône qu'il renforce et grâce à un aileron (6) qui le positionne dans la direction optimale en fonction du vent son action est toujours maximale.

L'action e renfort du dispositif se fait par soutient grâce à une structure rigide type béquille (2) et par traction grâce à une structure pouvant être souple type hauban.

La poussée du vent exercée sur la partie haute du pylône est transmise par la béquille (2) ou le hauban soit directement au sol, soit au socle du pylône, plusieurs versions étant possibles.

Pouvant être profilé il convient particulièrement aux pylônes d'éolienne.

## Description

### 1. DOMAINE TECHNIQUE DE L'INVENTION.

Le domaine technique de l'invention est le renforcement de l'ensemble des constructions, structures ou objets subissant l'action du vent et dont la surface de base est relativement réduite par rapport à leur hauteur : à titre d'exemple et de manière non exhaustive sont inclus dans ces structures ou objets : les mats, les pylônes, les supports d'éoliennes, les piliers, les poteaux, les cheminées, les tours, les châteaux d'eau, les colonnes et certains immeubles.) Ces structures étant allongées et généralement proches d'une position verticale nous les désignerons dorénavant par le terme : **« l'objet vertical »** même si elles sont parfois inclinées, comme la tour de Pise.

### 2. ETAT DE LA TECHNIQUE ANTERIEURE.

La technique antérieure consiste à renforcer la résistance au vent de **« l'objet vertical »** soit en élargissant sa base, soit en utilisant des matériaux plus résistants ou solides (fibre de verre à la place de bois, titane à la place d'acier etc....), soit en utilisant des haubans ou d'autres nombreuses méthodes. L'ensemble de ces méthodes renforcent « **l'objet vertical »** soit dans toutes les directions, soit dans quelques directions fixes.

### 3. EXPOSE DE L'INVENTION.

L'invention consiste en un dispositif de renfort agissant par soutient et traction, caractérisé en ce que son action orientée n'est effective que dans un angle limité et caractérisé en ce que ce renfort a la faculté de tourner, selon la direction du vent, autour de l'axe central de **« l'objet vertical ».** La réunion de ces 2 caractéristiques permettant de concentrer l'action du dispositif de renfort spécifiquement aux emplacements de « **l'objet vertical** » subissant les plus fortes contraintes liées au vent.

La rotation pourra se faire automatiquement par l'action du vent comme tourne le coq d'une girouette ou elle pourra être motorisée.

Chaque « **objet vertical** » situé à l'extérieur subit la poussée du vent. Cette poussée a 4 caractéristiques.
I. La puissance du vent est variable.
II. Dans un court laps de temps de l'ordre d'une seconde le sens du vent est pratiquement unidirectionnel.
III. Sur une plus longue période de temps le sens du vent varie, tout en restant presque horizontal, aucune direction n'est exclue, même si statistiquement certaines directions dans certains lieux sont plus probables.
IV. La puissance du vent est plus élevée en altitude.

L'invention est conçue pour s'adapter parfaitement aux caractéristiques du vent, en atténuant ou supprimant à moindre cout les effets négatifs de l'excès de vent sur

### « l'objet vertical »

I. La puissance du vent étant variable, certains vents violents ou tempêtes peuvent endommager « l'objet vertical » ; le dommage de « l'objet vertical » pouvant aller jusqu'à sa chute ou sa destruction.
   « L'objet vertical » subit une poussée presque horizontale qui dépend de son aérodynamisme relatif, de sa hauteur, de sa surface exposée et de la force du vent. Il doit donc être conçu pour résister au niveau maximum atteignable par le vent. Le but de l'invention est que grâce à son utilisation l'objet vertical aura une résistance au vent supérieure tout en ayant un cout final de construction inférieur, le cout final incluant celui de la fabrication de l'invention.
II. Dans un cours laps de temps de l'ordre d'une seconde le sens du vent est unidirectionnel.
   Dans ce cours laps de temps, l'invention aura une action de quelques degrés toujours précisément dans le sens opposé à la force unidirectionnelle engendrée par le vent.
III. Sur une plus longue période de temps le sens du vent varie.
   L'invention s'adapte à cette caractéristique en tournant autour de l'axe central de « l'objet vertical » pour se positionner de manière à toujours s'opposer à la poussée engendrée par le vent sur « l'objet vertical ».
IV. La puissance du vent est plus élevée en altitude.
   La poussée du vent plus importante dans les parties hautes crée un effet de levier. En s'opposant à cette poussée sur la partie haute de « l'objet vertical » l'invention diminuera cet effet de levier.

### 4. PRESENTATIONS DES DESSINS ET IMAGES.

La description de l'invention sera accompagnée par des dessins et quelques photos.

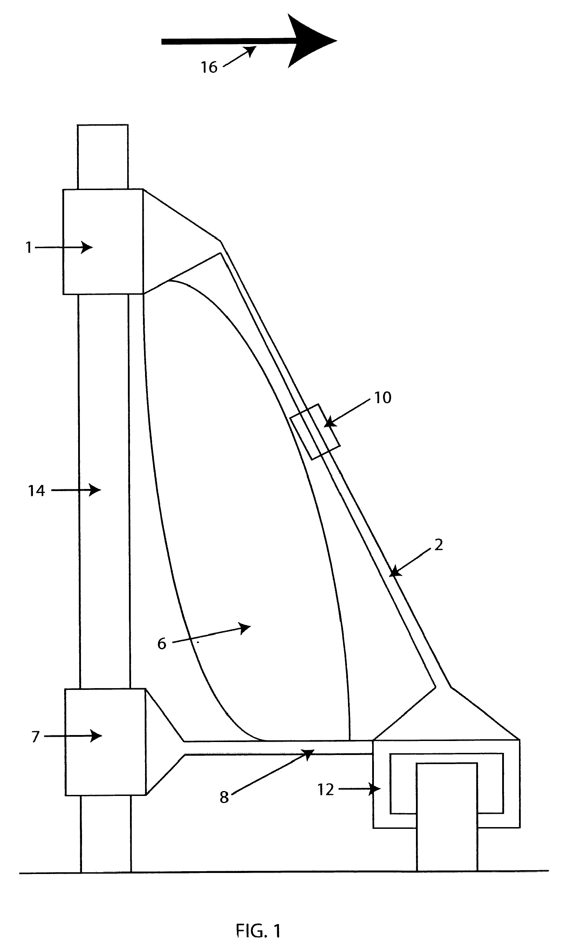

La figure 1 représente de profil le dispositif de renfort par soutient prenant appui au sol.

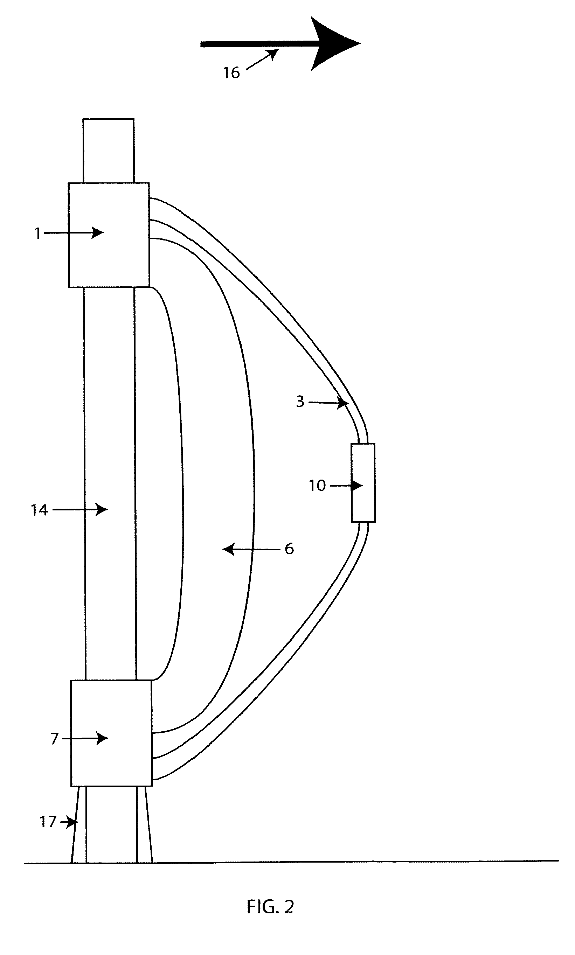

La figure 2 représente de profil le dispositif de renfort par soutient prenant appui au socle de « l'objet vertical ».

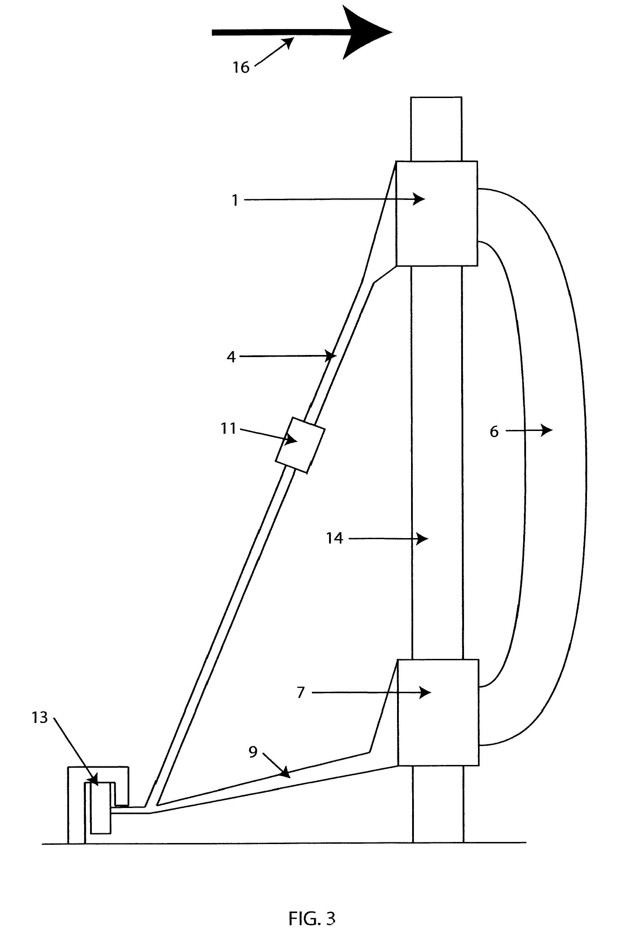

La figure 3 représente de profil le dispositif de renfort par traction relié au sol.

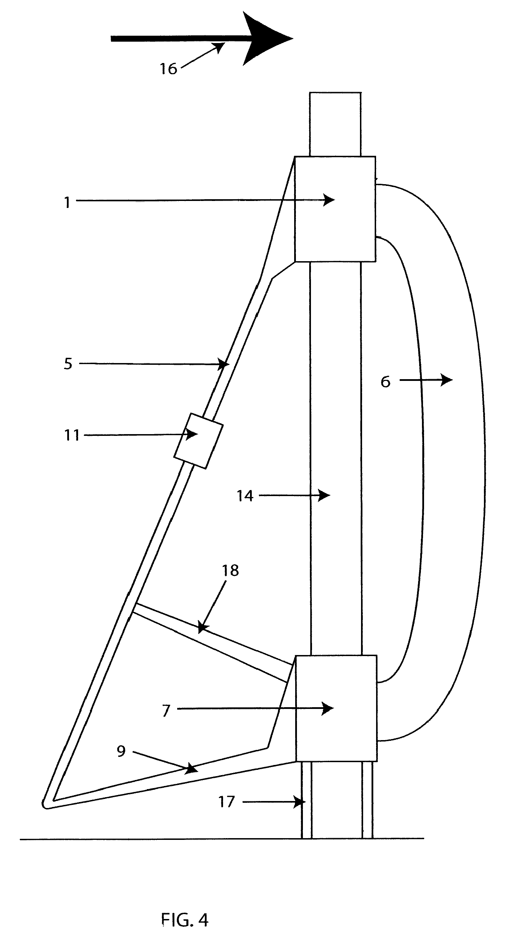

La figure 4 représente de profil le dispositif de renfort par traction relié au socle de « l'objet vertical ».

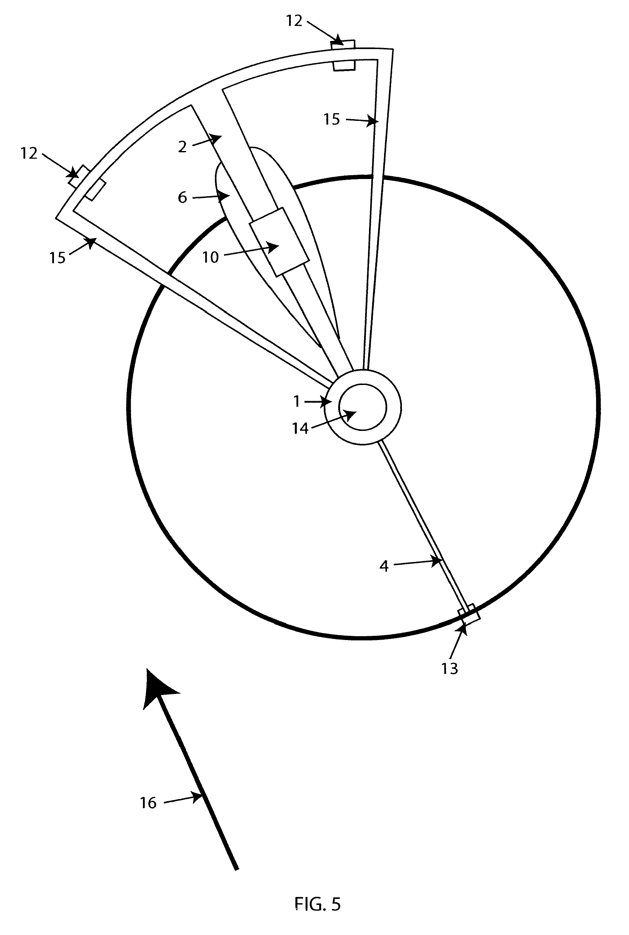

La figure 5 représente, vue d'en haut le dispositif de renfort par soutient prenant appui au sol, couplé au dispositif de renfort par traction relié au sol.

### 5. EXPOSE DETAILLE DE L'INVENTION S'ADDAPTANT AUX CARACTERISTIQUES DE LA POUSSEE DU VENT SUR « L' OBJET VERTICAL » ET PERMETTANT DE RENFORCER SA RESISTANCE A CETTE POUSSEE.

L'invention consiste en la création d'un renfort mobile tournant autour de l'axe de « l'objet vertical » lui permettant d'augmenter sa résistance vis-à-vis des 4 caractéristiques exposées ci-dessus de la poussée du vent.

L'invention pourra donc tourner à 360° autour de « l'objet vertical » et ainsi le renforcer spécifiquement en fonction du sens de l'orientation du vent pour s'opposer aux effets néfastes d'une puissance excessive du vent.

Son orientation se fera soit de manière automatique en réaction à l'action du vent de par sa forme comme cela se produit sur les girouettes soit par une action motorisée. L'action motorisée pouvant être commandée manuellement ou se faire automatiquement par un procédé électronique adéquat.

Le renforcement de « l'objet vertical » uniquement dans un angle réduit lié au sens du vent présente 2 avantages par rapport à un renforcement général dans toutes les directions.(18° est pris à titre d'exemple, d'autres angles étant possibles.)
a. Il est beaucoup moins onéreux à réaliser. Renforcer « l'objet vertical » sur 18° coutera près de 20 fois moins que de renforcer sur 360° (18 : 360 = 1 : 20).
b. Renforcer « l'objet vertical » sur 18° augmentera beaucoup moins la surface exposée au vent que ne le ferait un renforcement sur 360°. Le renforcement sur 360° augmenterait fortement la surface exposée diminuant ainsi l'effet positif du renforcement sur « l'objet vertical ».

DESCRIPTION DE L'INVENTION ; La description de l'invention détaillera 13 parties spécifiques, cependant, selon certaines options, l'invention fonctionnera même en l'absence de quelques unes de ces parties.
1. La fixation supérieure (1)
2. La béquille avec appui au sol (2)
3. La béquille avec appui au socle de l'objet vertical (3)
4. Le hauban relié au sol (4)
5. Le hauban relié au socle de l'objet vertical (5).
6. L'aileron (6)
7. La fixation inférieure (7).
8. La bôme de la béquille (8).
9. La bôme du hauban (9).
10. L'amortisseur de la béquille (10).
11. L'amortisseur du hauban (11).
12. Le matériel roulant de la béquille avec appui au sol (12).
13. Le matériel roulant du hauban relié au sol (13).

1. La fixation supérieure (1) Le rôle de cette partie est de connecter les 2 sortes de béquille (2) ou (3) et les 2 sortes de hauban (4) ou (5) à la partie haute de l'objet vertical (14) de manière telle que les 2 types de béquille ou de hauban puissent avoir la liberté de tourner autour de l'objet vertical(14) tout en permettant que la poussée exercée par le vent sur la partie supérieure de l'objet vertical (14) soit transmise à la béquille avec appui au sol (2) ou à la béquille avec appui au socle (3) et que la traction sur la partie supérieure de l'objet vertical (14) soit transmise au hauban relié au sol (4) ou au hauban relié au socle (5).
   A titre d'exemple la fixation supérieure (1) pourra prendre la forme d'une bague, comportant éventuellement des roulements à billes ou autre dispositif diminuant les frottements lors de la rotation de la béquille (2) ou (3) et du hauban (4) ou (5) autour de l'objet vertical (14). Eventuellement un dispositif évitant le blocage du mouvement par le gel pourra être intégré. A titre d'exemple ce dispositif pourra être une résistance électrique ou une pièce coulissant dans l'huile.
2. La béquille avec appui au sol (2) : La béquille avec appui au sol (2) doit répondre à 3 impératifs.
   a. Le premier impératif de la béquille avec appui au sol (2) est de minimiser l'augmentation de la surface de l'ensemble invention-objet vertical (14) exposée au vent. Dans certains cas elle permettra d'améliorer l'aérodynamisme de l'ensemble en profitant de son action tournante pour intégrer à l'objet vertical (14) un carénage tournant toujours bien orienté vis-à-vis du vent.
      Pour répondre à cette exigence, la béquille avec appui au sol (2) sera profilée et offrira le moins possible de surface exposée au vent et aura une forme aérodynamique orientée en fonction de la direction du vent (16).
   b. Le deuxième impératif de la béquille avec appui au sol (2) est de renforcer l'objet vertical (14). Pour cela elle doit transmettre la force provenant de la fixation supérieure (1) au matériel roulant de la béquille avec appui au sol (12) et renvoyer la force de réaction du matériel roulant de la béquille avec appui au sol (12) à la fixation supérieure (1) diminuant ainsi fortement les effets négatifs de le poussée du vent sur la partie supérieure de l'objet vertical (14). Son action est proche de celle d'une béquille de moto lorsque celle-ci soutient le véhicule. Si nécessaire la fixation supérieure (1) pourra être très longue, quasiment de la longueur de l'objet vertical (14) permettant à la béquille avec appui au sol (2) de transmettre la quasi-totalité de la force exercée par le vent sur toute la longueur de l'objet vertical (14) au matériel roulant de la béquille avec appui au sol (12).
      Pour répondre à cette exigence la béquille avec appui au sol (2) aura la résistance suffisante pour résister aux forces induites par le vent sur l'objet vertical (14). Il faut noter que la béquille avec appui au sol (2) subira essentiellement une force axiale de compression et que les forces axiales écrasant la matière entrainent beaucoup moins de contraintes que les forces perpendiculaires ayant un effet de levier, l'ensemble de l'objet vertical (14) et de la béquille avec appui au sol (2) auront donc une résistance au vent accrue avec une diminution des couts des matériaux utilisés. Par exemple, avec l'invention à cout moindre, les éoliennes pourront être plus hautes et plus résistantes au vent.
      Un système amortissant pour béquille (10) se raccourcissant sous la pression et absorbant l'énergie induite par les rafales de vent pourra être inclus dans la béquille avec appui au sol (2). Un amortisseur avec des roues tournant dans l'huile me semble très adéquat pour diminuer les mouvements de résonnance mais d'autres types d'amortisseur sont possibles.
      La forme la plus simple à réaliser de la béquille avec appui au sol (2) vue de profil sera un ensemble de tiges quasiment rectilignes.
   c. Le troisième impératif de la béquille avec appui au sol (2) est de stabiliser l'ensemble objet vertical (14) - invention en ayant une action sur plusieurs degrés (probablement entre 10 et 60°). Ceci est nécessaire car un angle d'action trop étroit rendrait l'ensemble trop sensible aux variations infinitésimales de la direction du vent (16) et engendrerait des phénomènes de torsion.
      Pour répondre à cette exigence la béquille avec appui au sol (2) aura au moins 2 bras (15) formant un angle de quelques degrés afin d'encadrer les petits changements rapides de la direction du vent (16). Avec ce nombre de bras (15) supérieur ou égal à 2 la béquille avec appui au sol (2) pourra assurer une stabilité suffisante grâce à une base de soutient. Prévoir une très légère flexion de l'objet vertical (14) dans le sens du vent permettra de canaliser les forces induites par le vent à l'intérieur de la base de soutient situé à l'intérieur des bras (15) de la béquille avec appui au sol (2).
3. La béquille avec appui au socle (3) doit répondre également à 3 impératifs.
   a. Le premier impératif de la béquille avec appui au socle (3) est de minimiser l'augmentation de la surface de l'ensemble invention-objet vertical (14) exposée au vent. Dans certains cas elle permettra d'améliorer l'aérodynamisme de l'ensemble en profitant de son action tournante pour intégrer à l'objet vertical (14) un carénage tournant toujours bien orienté vis-à-vis du vent.
      Pour répondre à cette exigence, la béquille avec appui au socle (3) sera profilée et offrira le moins possible de surface exposée au vent et aura une forme aérodynamique orientée en fonction de la direction du vent (16).
   b. Le deuxième impératif de la béquille avec appui à la base de l'objet vertical (3) est de renforcer l'objet vertical (14). Pour cela elle doit transmettre la force provenant de la fixation supérieure (1) au socle de l'objet vertical (14) en passant par la fixation inférieure (7) et renvoyer la force de réaction de la fixation inférieure (7) à la fixation supérieure (1) diminuant ainsi fortement les effets négatifs de la poussée du vent sur la partie supérieure de l'objet vertical (14).
      Pour répondre à cette exigence la béquille avec appui à la base de l'objet vertical (3) aura la résistance suffisante pour résister aux forces induites par le vent sur l'objet vertical (14). Il faut noter que la béquille avec appui au socle (3) subira essentiellement une force axiale de compression et que les forces axiales écrasant la matière entrainent beaucoup moins de contraintes que les forces perpendiculaires ayant un effet de levier, l'ensemble de l'objet vertical (14) et de la béquille au socle (3) auront donc une résistance au vent accrue avec une diminution des couts des matériaux utilisés.
      Le système amortissant pour béquille (10) pourra être inclus dans la béquille avec appui au socle (3).
      La forme la plus simple à réaliser de la béquille avec appui au socle (3) vue de profil sera un arc de cercle.
   c. Le troisième impératif de la béquille avec appui au socle (3) est de stabiliser l'ensemble objet vertical (14) - invention en ayant une action sur plusieurs degrés (probablement entre 10 et 60°). Ceci est nécessaire car un angle d'action trop étroit rendrait l'ensemble trop sensible aux variations infinitésimales de la direction du vent (16) et engendrerait des phénomènes de torsion.
      Pour répondre à cette exigence la béquille avec appui au socle (3) aura au moins 2 bras (15) formant un angle de quelques degrés afin d'encadrer les petits changements rapides de la direction du vent(16) . Avec ce nombre de bras (15) supérieur ou égal à 2 la béquille avec appui au socle (3) pourra assurer une stabilité suffisante grâce à une base de soutient.
      Prévoir une très légère flexion de l'objet vertical (14) dans le sens du vent permettra de canaliser les forces induites par le vent à l'intérieur de la base de soutient situé à l'intérieur des bras (15) de la béquille avec appui au socle (3).
      En élargissant la base de l'objet vertical (14) ou en utilisant des matériaux plus résistants il sera possible de consolider le socle de l'objet vertical (14). Cette amélioration de la base sera nommée consolidation du socle (17).
      L'option de la béquille avec appui au sol (2) ou au socle (3) de l'objet vertical (14) dépendra notamment de la surface stable dont on dispose autour de l'objet vertical (14). Une éolienne en mer utilisera la béquille avec appui au socle (3) ou à la base de sa partie émergente.
4. Le hauban relié au sol (4): Cette partie a un rôle symétrique à celui de la béquille avec appui au sol (2) sauf qu'il agira en traction au lieu de le faire en soutient mais comme pour la béquille avec appui au sol (2) le hauban relié au sol (4) doit répondre à 3 impératifs.
   a. Le premier impératif du hauban relié au sol (4) est de minimiser l'augmentation de la surface de l'ensemble invention-objet vertical (14) exposé au vent. Comme pour la béquille il y aura la possibilité d'améliorer l'aérodynamisme de l'ensemble en profitant de son action tournante pour intégrer un carénage à l'objet vertical (14). Pour répondre à cette exigence, le hauban relié au sol (4) sera profilé et offrira le moins possible de surface exposée au vent et aura une forme aérodynamique orientée en fonction de la direction du vent (16).
   b. Le deuxième impératif du hauban relié au sol (4) est de renforcer l'objet vertical (14). Pour cela il doit transmettre la force provenant de la fixation supérieure (1) au matériel roulant du hauban relié au sol (13) et renvoyer la force de réaction du matériel roulant du hauban relié au sol (13) à la fixation supérieure (1) diminuant ainsi fortement les effets négatifs de le poussée du vent sur la partie supérieure de l'objet vertical (14). Son action est proche de celle d'un hauban soutenant un mat de bateau. Comme pour la béquille la fixation supérieure (1) pourra être très longue, quasiment de la longueur de l'objet vertical (14) permettant au hauban relié au sol (4) de transmettre la quasi-totalité de la force exercée par le vent sur toute la longueur de l'objet vertical (14) au matériel roulant du hauban relié au sol (13).
      Pour répondre à cette exigence le hauban relié au sol (4) aura la résistance suffisante pour résister aux forces induites par le vent sur l'objet vertical (14). Il faut noter que le hauban relié au sol (4) subira essentiellement une force axiale de traction et que les forces axiales étirant la matière entrainent beaucoup moins de contraintes que les forces perpendiculaires ayant un effet de levier, l'ensemble de l'objet vertical (14) et du hauban relié au sol (4) auront donc une résistance au vent accrue avec une diminution des couts des matériaux utilisés.
      Un système amortissant pour hauban (11) se rallongeant sous la traction et absorbant l'énergie induite par les rafales de vent pourra être inclus dans le hauban relié au sol (4). Un amortisseur à ressort me semble adéquat pour diminuer les mouvements de résonnance mais d'autres types d'amortisseur sont possibles.
   c. Le troisième impératif du hauban relié au sol (4) est de stabiliser l'ensemble objet vertical (14) - invention en ayant une action sur plusieurs degrés (probablement entre 10 et 60°). Ceci est nécessaire car un angle d'action trop étroit rendrait l'ensemble trop sensible aux variations infinitésimales de la direction du vent (16) et engendrerait des phénomènes de torsion.
      La forme la plus simple à réaliser du hauban relié au sol (4) vue de profil sera rectiligne. Ayant un rôle de traction le hauban relié au sol (4) pourra être constitué de câbles ou de tiges.
5. Le hauban relié au socle (5).
   Cette partie a un rôle symétrique à celui de la béquille avec au socle (3) sauf que le hauban relié au socle (5) agira en traction au lieu de le faire en soutient, mais comme la béquille avec appui au socle (3) le hauban relié au socle (5) doit répondre à 3 impératifs.
   a. Le premier impératif du hauban relié au socle (5) est de minimiser l'augmentation de la surface de l'ensemble invention-objet vertical (14) exposé au vent. Comme pour la béquille il y aura la possibilité d'améliorer l'aérodynamisme de l'ensemble en profitant de son action tournante pour intégrer à l'objet vertical (14) un carénage. Pour répondre à cette exigence, le hauban relié au socle (5) sera profilé et offrira le moins possible de surface exposée au vent et aura une forme aérodynamique orientée en fonction de la direction du vent (16).
   b. Le deuxième impératif du hauban relié au socle (5) est de renforcer l'objet vertical (14). Pour cela il doit transmettre la force provenant de la fixation supérieure (1) à la fixation inférieure (7) et renvoyer la force de réaction de la fixation inférieure (7) à la fixation supérieure (1) diminuant ainsi fortement les effets négatifs de la poussée du vent sur la partie supérieure de l'objet vertical (14).
      Pour répondre à cette exigence le hauban relié au socle (5) aura la résistance suffisante pour résister aux forces induites par le vent sur l'objet vertical(14)
      Le hauban relié au socle (5) pourra avoir 2 formes différentes, soit en arc de cercle s'il est directement relié à la fixation inférieure (7), soit rectiligne s'il est relié à une bôme elle-même reliée à la fixation inférieure (7).
      Dans les 2 cas l'effet de levier subit par l'objet vertical (14) sera diminué mais par contre il sera présent à l'intersection du hauban relié au socle (5) et de la bôme ou à la jonction du hauban relié au socle (5) et de la fixation inférieure (7).
      Il faudra donc prévoir des entretoises (18) pour résister à cet effet de levier.
      La base de l'objet vertical (14) subira elle aussi de par l'action du hauban relié au socle (5) des contraintes supplémentaires et devra donc être renforcée en conséquence.
      Un système amortissant pour hauban (11) se rallongeant de courts instants sous la traction et absorbant l'énergie induite par les rafales de vent pourra être inclus dans le hauban relié au socle (5).
   c. Le troisième impératif du hauban relié au socle (5) est de stabiliser l'ensemble objet vertical (14) - invention en ayant une action sur plusieurs degrés.
      Ceci est nécessaire car un angle d'action étroit rendrait l'ensemble trop sensible aux variations infinitésimales de la direction du vent (16) et engendrerait des phénomènes de torsion. Elargir l'extrémité de la bôme reliée au hauban (9) ainsi que l'extrémité du hauban reliée au socle (5) est une solution.
6. L'aileron (6). Grace à sa forme spécifique, l'aileron (6) orientera le dispositif de renfort précisément dans la direction qui maximisera l'action du dispositif en fonction de la direction du vent (16).
   La forme de l'aileron (6) devra être étudiée pour répondre à 2 critères.
   Premièrement, comme la queue du coq d'une girouette, l'aileron (6) aura une forme conçue pour que par simple aérodynamisme la force engendrée par le vent le fasse tourner lui, ainsi que le dispositif de manière à les placer dans la direction angulaire permettant au dispositif de maximiser son action de renfort quelle que soit la direction et l'intensité du vent.
   L'aileron (6) devra toujours garder les 2 sortes possibles de hauban (4) ou (5) orientés dans la direction d'où vient le vent et les 2 sortes possibles de béquille (2) ou (3) dans la direction opposée à celle de la provenance du vent.
   Deuxièmement, toujours derrière le tronc de l'objet vertical (14) l'aileron (6) devra avoir une forme étudiée pour minimiser la surface exposée au vent de l'ensemble invention-objet vertical (14).
   La rotation de l'invention autour de l'objet vertical (14) induite par l'aileron (6) pourra être aidée ou accéléré par l'utilisation d'un moteur commandé soit manuellement, soit par un procédé automatique ou électronique.
7. La fixation inférieure (7).
   Le rôle de la fixation inferieure (7) est de solidariser la base de l'objet vertical (14) soit directement aux parties inférieures des 2 sortes de béquille ou de tendeur soit aux bômes reliées aux parties inférieures des 2 sortes de béquille ou de tendeur de manière telle que les 2 sortes de béquille ou de tendeur puissent avoir la liberté de tourner autour de l'objet vertical (14) en restant à distance constante de celui-ci. Dans le cas de la béquille avec appui au sol (2) la fixation inférieure (7) sera reliée à la bôme de la béquille (8), la fixation inférieure (7) ainsi que la base de l'objet vertical (14) ne subiront pratiquement pas de forces supplémentaires.
   Dans le cas de la béquille avec appui au socle (3) la fixation inférieure (7) sera directement reliée à la base de la béquille et recevra donc les forces transmises par la béquille avec appui au socle (3) provenant de la partie supérieure de l'objet vertical (14). La fixation inférieure (7) devra transmettre ces forces à la base de l'objet vertical (14), cette base devra donc être consolidé en conséquence.
   Dans le cas du hauban relié au sol (4) la fixation inférieure (7) sera reliée à la bôme du hauban (9), la fixation inférieure (7) ainsi que la base de l'objet vertical (14) ne subiront pratiquement pas de forces supplémentaires.
   Dans le cas du hauban relié au socle (5) la fixation inférieure (7) sera soit directement relié à la partie inférieure du hauban soit indirectement à la partie inférieure du hauban en passant par la bôme du hauban (9) mais dans les 2 cas elle recevra les forces de traction provenant de la partie supérieure de l'objet vertical (14).
   La fixation inférieure (7) devra transmettre ces forces à la base de l'objet vertical (14), Cette base devra donc être consolidée en conséquence.
   A titre d'exemple la fixation inférieure (7) pourra prendre la forme d'une bague, comportant éventuellement des roulements à billes ou autre dispositif diminuant les frottements lors de la rotation des 2 sortes de béquille (2) ou (3) et de hauban (4) ou (5) autour de l'objet vertical (14). Eventuellement un dispositif évitant le blocage du mouvement par le gel pourra être intégré. Ce dispositif pourra être une résistance électrique ou une pièce coulissant dans l'huile.
8. La bôme de la béquille (8). Cette partie du dispositif aura pour rôle de conserver la base de la béquille avec appui au sol (2) à équidistance de la base de l'objet vertical (14), Elle sera constituée de tiges.
9. La bôme du hauban (9). Cette partie du dispositif aura aussi pour rôle de conserver la base des 2 sortes de hauban (4) ou (5) à équidistance de la base de l'objet vertical (14). Elle sera constituée de tiges mais dans le cas du hauban relié au socle (5), la bôme du hauban (9) devant transmettre des forces de traction provenant de la partie supérieure de l'objet vertical (14), sa résistance devra être suffisante. Des entretoises (18) reliés à la bôme du hauban (9) et au hauban relié au socle (5) pourront être placées afin d'éviter une action de levier sur la bôme du hauban (9).
10. Le matériel roulant de la béquille avec appui au sol (12). En contact avec le sol, relié à la partie inférieure de la béquille avec appui au sol (2) et à la bôme de la béquille (8) le rôle du matériel roulant de la béquille avec appui au sol (12) va être de transmettre les forces provenant de la partie supérieure de l'objet vertical (14) au travers de la béquille avec appui au sol (2) sur une partie du sol aménagé à cet effet. Le matériel roulant de la béquille avec appui au sol (12) devra permettre à la béquille avec appui au sol (2) de décrire un cercle autour de l'objet vertical (14) avec le moins de frottements possibles. Cette partie du dispositif pourra être un de chariot à roues ou une glissière de roulements à billes sur un rail. Dans certains cas son circuit circulaire autour de l'objet vertical (14) pourra être recouvert afin que la neige ne puisse bloquer la fluidité de son parcours. L'utilisation de parties immergées dans l'huile ou de résistances chauffantes pourra éviter de bloquer son action en cas de gel.
11. Le matériel roulant du hauban relié au sol (13). Solidaire à la fois du hauban relié au sol (4) et de la bôme du hauban (9) il va permettre au hauban relié au sol (4) de décrire un cercle autour de l'objet vertical (14) avec le moins de frottements possibles. Sa fixation au sol lui permettra de se déplacer de manière fluide sur un cercle tout en transmettant au sol la force de traction provenant de la partie supérieure de l'objet vertical (14) à travers du hauban relié au sol (4). Une des méthodes pour y parvenir étant un chariot à roues situé sous un rail suspendu décrivant le cercle autour de l'objet vertical (14). Comme pour le matériel roulant de la béquille avec appui au sol (12) le matériel roulant du hauban relié au sol (13) pourra se voir adjoindre des dispositifs empêchant le gel ou la neige de bloquer ou ralentir son déplacement tournant autour de l'objet vertical (14).

Le principe de l'invention est de renforcer « l'objet vertical » contre l'action excessive du vent. L'invention peut comporter 2 parties tournantes actives, le tendeur et la béquille. Dans certains cas une seule de ces 2 parties actives est suffisante. Il est donc évident que la demande de brevet est faite pour l'invention incluant, soit les 2 parties actives, soit 1 seule de ces 2 parties actives.

Trois cas particuliers sont à envisager :
1. « l'objet vertical » est une éolienne.
   Pour une éolienne la fixation supérieure (1) du hauban dans la partie traction doit être différente, car les pales tournantes de l'éolienne rentreraient en collision avec le hauban en cas de fixation non modifiée.
   La fixation supérieure (1) doit soit être beaucoup plus basse, soit elle doit passer par l'axe de rotations des pales de l'éolienne.
2. L'invention pourra se présenter sous forme de carénage tournant renforcé. Ce carénage respectera le principe de l'invention. Il tournera autour de l'objet vertical (14) en présentant face au vent son coté aérodynamique et il sera étudié pour être renforcé intérieurement par la béquille et le hauban, automatiquement orienté par la forme du carénage.
3. L'objet vertical (14) pourra être conçu dès sa construction pour intégrer de manière interne l'invention. Dans ce cas l'objet vertical (14) dans son ensemble pivotera sur lui-même afin de présenter son coté aérodynamique au vent et sa structure interne asymétrique spécifiquement renforcée dans la direction lui permettant d'augmenter sa résistance à la poussée du vent.

### 6. applications industrielles de l'invention.

L'invention apporte un plus très intéressant avec sa rotation autour de l'axe vertical à la solidité des objets verticaux subissant la poussée du vent car elle renforce l'objet vertical (14) contre la poussée qu'il subit sans quasiment augmenter et pouvant même parfois diminuer la traînée de l'objet vertical (14) additionnée à la trainée de l'invention quelque soit la direction du vent (16).

Toute solution fixe nécessite soit de déterminer à l'avance le sens du vent, soit de renforcer dans plusieurs directions l'objet vertical (15). Déterminer le sens du vent représente un risque car le sens du vent varie et un renfort multidirectionnel est plus onéreux et augmente la trainée de l'objet vertical additionnée à la trainée du renfort situé dans un axe différent de celui de la direction du vent(16).

Grâce à son ratio solidité /coût avantageux l'invention pourra être applique dans de très nombreux domaines. Par exemple à coût et solidité équivalents les éoliennes pourront être plus hautes, donc plus rentables car le vent est plus fort en altitude, et les pylônes électriques à haute tension seront plus résistants aux tempêtes.

## Revendications

1. Dispositif pour limiter le fléchissement ou éviter la rupture d'une structure verticale (14) allongée de type poteau soumise à la contrainte du vent, **caractérisé en ce qu'**il comprend une partie rigide, proche d'une béquille, qui exerce son action de renfort par soutient dans un angle limité et une partie tendue proche d'un hauban qui exerce son action de renfort par traction elle aussi dans un angle limité, ces armatures de renfort étant reliées à la structure verticale (14) par une fixation supérieure (1) et une fixation inférieure (7) semblables à des bagues leur permettant tout en étant solidaires de la structure verticale (14) de pouvoir tourner autour de celle-ci et grâce à l'adjonction d'un aileron (6) dont le rôle est d'orienter le dispositif dans une direction liée à la direction du vent (16), les structures de renfort seront orientées automatiquement dans la position qui leur permettra d'avoir une efficacité maximum malgré leur angle d'action limité.

2. Dispositif selon la revendication 1 **caractérisé en ce que** le soutient par renfort type béquille constitué d'une armature rigide peut prendre 2 formes différentes, soit il est presque rectiligne et il transmet la poussée engendrée par le vent dans la partie supérieure de la structure verticale (14) au sol au travers d'un matériel roulant (12) type chariot dans le cas d'une béquille avec appui au sol (2), soit il a une forme proche d'un arc de cercle et il transmet la poussée engendrée par le vent dans la partie supérieure de la structure verticale (14) à la base de cette même structure en passant par la fixation inférieure (7) dans le cas d'une béquille avec appui au socle de l'objet vertical (3) mais dans les 2 cas le dispositif diminue très fortement l'effet de levier qu'exerce le vent sur la structure verticale (14).

3. Dispositif selon la revendication 1 **caractérisé en ce que** le soutient par traction type hauban est constitué de câbles ou tiges dont le rôle est de transmettre la traction engendrée par le vent dans la partie supérieure de la structure verticale (14) au sol en passant par un matériel roulant (13) type chariot à roues situé sous un rail suspendu dans le cas d'un hauban relié au sol (4), soit à la base de la structure verticale (14) en passant par la fixation inférieure (7) dans le cas d'un hauban relié au socle de l'objet 30 vertical (5) mais dans les 2 cas le dispositif diminue très fortement l'effet de levier qu'exerce le vent sur la structure verticale (14).

4. Dispositif selon la revendication 1 **caractérisé en ce que**, grâce à des roulements à billes ou autre dispositif diminuant les frottements et des résistances électriques ou des pièces coulissant dans l'huile, la fixation supérieure (1) et la fixation inférieure (7) pourront avoir une rotation fluide autour de l'objet vertical (14) même en cas de gel.

5. Dispositif selon la revendication 1 **caractérisé en ce que**, grâce à la préparation du sol et à l'adjonction d'un toit ou à la fabrication d'un tunnel et éventuellement une immersion dans de l'huile,le parcours circulaire du matériel roulant de la béquille avec appui au sol (12) et celui du matériel roulant du hauban relié au sol (13) seront assuré avec des frottement minimes y compris en cas de gel ou de chute de neige importante.

6. Dispositif selon la revendication 1 **caractérisé en ce que** l'aileron (6) pourra tourner de manière fluide autour de l'axe principal de la structure verticale (14), qu'il aura une forme telle que la force du vent l'orientera de manière précise en fonction du sens du vent et que sa dimension sera suffisante pour faire tourner avec lui les béquilles avec appui au sol (2) ou avec appui au socle de l'objet vertical (3) et les haubans reliés au sol (4) ou reliés au socle de l'objet vertical (5), en cas de nécessité l'action de l'aileron (6) pourra être renforcée par un dispositif électronique couplé à un moteur permettent un replacement plus rapide des béquilles ou haubans.

7. Dispositif selon la revendication 1 ou la revendication 6 **caractérisé en ce que** comme l'aileron (6) oriente les différentes sortes de béquille et de hauban ceux-ci pourront avoir une forme et un carénage qui augmentera très peu, voire même diminuera la poussée exercée par le vent sur l'ensemble « invention - structure verticale (14) », profitant de cette rotation le carénage pourra recouvrir l'ensemble de la structure verticale (14) et même dès sa construction, la structure verticale (14) pourra avoir une forme profilée tournante diminuant sa prise au vent.

8. Dispositif selon la revendication 1 **caractérisé en ce que** au moins 2 bras (15) rigides formant un angle de quelques degrés situés de part et d'autre de la béquille avec appui au sol (2) ou de la béquille prenant appui au socle (3) encadrent les petits changements rapides de la direction du vent (16) afin de stabiliser l'action de renfort de la béquille avec appui au sol (2) ou de la béquille avec appui au socle de l'objet vertical (3).

9. Dispositif selon la revendication 1 ou la revendication 2 **caractérisé en ce que** la béquille prenant appui au sol (2) ou la béquille prenant appui au socle (3) peut être améliorée avec l'ajout dans sa structure d'un amortisseur pouvant se présenter sous différentes formes, à ressort, à gaz, incluant des roues tournant dans un liquide visqueux mais quelque soit la solution choisie sa fonction sera d'amortir les effets néfastes des brusques coups de vent et d'éviter les effets de résonance que le vent peut engendrer sur la structure verticale (14).

10. Dispositif selon la revendication 1 **caractérisé en ce que** les structures de renfort de l'invention étant particulièrement efficaces pour renforcer les pylônes des éoliennes ayant à subir une forte poussée du vent dans leur partie supérieure, il sera composé d'un axe solide passant au centre du rotor de l'éolienne pour que l'on puisse fixer soit le hauban relié au sol (4), soit le hauban relié au socle de l'objet vertical (5) sans entraver la rotation des pales.
